# EUROPEAN PATENT SPECIFICATION

(11) **EP 1 235 373 B1**
(45) Date of publication and mention of the grant of the patent: **25.10.2006**
(21) Application number: 02290107.8
(22) Date of filing: 16.01.2002
(51) Int. Cl.: H04J 3/08

(54) **Method for managing multiple failures of different type in ring-shaped telecommunicatons network**
Verfahren zur Verwaltung mehrfacher Fehler verschiedener Art in einem ringförmigen Nachrichtenübertragungsnetzwerk
Méthode de gestion des plusieurs fauts des types divers dans un réseau annulaire de télécommunication

(30) Priority: 26.02.2001 IT MI010381
(43) Date of publication of application: 28.08.2002
(73) Proprietor: ALCATEL, 75008 Paris (FR)
(72) Inventor: Manganini, Andrea, 20058 Villasanta (Milano) (IT); Casazza, Elena, 24045 Fara Gera d'Adda (Bergamo) (IT)
(74) Representative: Menzietti, Domenico

(56) References cited:
- EP-A- 0 456 206
- "TYPES AND CHARACTERISTICS OF SDH NETWORK PROTECTION ARCHITECTURES" , ITU-T TELECOMMUNICATION STANDARIZATION SECTOR OF ITU, GENEVA, CH, PAGE(S) A-B,I-III,1- XP000672074 * the whole document *

## Description

The present invention relates to the field of the telecommunications ring networks and in particular concerns networks with a four-fiber ring topology whose traffic is protected by a distributed mechanism of an MS-SPRING type. Still more in particular it concerns a way to manage possible scenarios of multiple failures of different type in such networks.

In the field of telecommunications, fiber-optic networks with ring topology are known, the networks comprising a number of nodes or network elements connected with each other by fiber spans so as to form a ring. The traffic in such networks is carried over so-called paths, i.e. circuits connecting two or more network elements of the ring.

Mechanisms for traffic protection in such networks are also known. Among these, one kind of distributed mechanism called MS-SPRING (Multiplexed Section - Shared Protection Ring) is well known.

In the transoceanic SDH communications networks with a four-fiber ring topology wherein the protection is of an MS-SPRING type, the available band is subdivided into two parts: the high-priority channels (to be protected in the event of failure in the ring) and the low-priority channels (which are unprotected and, in the event of a failure, are squelced). Along the direction of transmission, two adjacent nodes are interconnected by four fibers (two in one direction and two in the opposite direction); the high-priority channels (denoted by HP) occupy, in the absence of failures, the working fiber, while the low-priority channels (LP) occupy the protection fiber, until the latter is required to perform protection in the ring.

In such networks, a span failure is referred to as the break (or the degrade) of one or both working fibers connecting two nodes, or the break of one or both protection fibers; in the first case (working fibers affected by the break) the span protection contemplates that all the HP traffic be restored by re-routing it over the protection fiber of the same span. Instead, a ring failure is referred to as the break (or the degrade) of both working and protection fibers between two adjacent nodes. In this case a ring protection is contemplated which provides for re-routing the HP traffic, that would be lost because of the break, in a direction opposite to the failure by utilizing the LP channels.

The problem common to all the protection mechanisms consists in protecting and saving the largest possible amount of HP traffic.

The ring topology provides that, in the event of a single failure, all the high-priority traffic is restored. However, the situation becomes critical when a plurality of failures are present in the ring: in order to maximize the protected traffic, every node should be able to signal all the local failures and commands so as to notify its requests to the entire ring.

The ring network protection management is standardized by the international organizations ITU (ITU-T Recommendation G. 841 Annex A) and ETSI. In both specifications, the protection protocol is based on a pair of bytes K1, K2 of the SDH (or SONET) frame, in particular of its MSOH section. Byte K1 is coded (in the following manner: its first four bits carry request codes while the next four bits carry the destination node identifications (ID) for the request code indicated in the first four bits. The functions of the byte K2 are as follows: the first four bits carry source node identifications, the last three bits define the state while the fifth bit represents a path length code (0 = short path, 1 = long path).

Inserted in the field of the request is the failure or command code, for which a coordinated action of the ring nodes is needed.

In the case of ring protection, all the nodes intervene directly, thus allowing the signalling to pass through the entire ring and possibly performing some actions on the traffic. A necessary condition for the ring protection to be managed is that the signalling reaches all the nodes (signalling on the long path) that will all get into a pass-through state (except the terminal node that will be in the Bridge & Switch state).

Instead, in the case of span protections it is not required that signalling reach all nodes: the only ones involved in the protection, are those adjacent to the span affected by the span failure. In this instance it is said that the span protection is managed through signalling over the short path. The status code synchronizes the actions to be taken so as to avoid misconnections on the paths.

The ITU-T Recommendation G. 841 contemplates that several span requests or several ring requests, but not both ring and span requests together, be served at the same time on the ring; in such a circumstance the traffic passing through the span affected by a span failure is protected but not the one passing through the span affected by the ring failure.

Moreover, some commands exist which are not signalled through the K-bytes to the other nodes, but they remain local; yet others (LP all span), even if not signalled, are requested to have global effect: they do not circulate on the K-bytes and therefore they have to be individually given to each node through management center.

EP0456206 (A2) discloses a first pair of bytes for indicating the request of ring protection; these bytes are indicated with User Bytes (UB) and are carryed in the overhead frame, like F1, Z1 or Z2, in order to manage one or more ring protections (indicated with "loopback" Instead of "ring"). For example in Fig.12A-12B-12B are indicated two requests of ring protections (failure between nodes A-B and B-C) and the ring protection is indicated with a loop at node C of Fig.12B-12C and at node A of Fig.12C. D1 also discloses at least one additional pair of bytes used for a point to point Multiplex Section Protection (MSP) scheme (K1 and K2 bytes), that is a protection scheme used for a linear topology and not for a ring one.

In view of the drawbacks and deficiencies of the known and standardized solutions, as described above, the main object of the present invention is to provide a method for managing multiple failures of different type (ring and span) in transoceanic telecommunications networks with a ring topology.

This and further objects are achieved by a method having the features set forth in the independent claims 1 or 5, by a frame structure in accordance with claim 10 and by a network element in accordance with claim 13. Further advantageous characteristics are set forth in the dependent claims.

The basic idea of the present invention consist in providing for a further signalling for the protection, using a second pair of bytes K1 and K2, picked from not yet used bytes, in the SDH (or SONET) frame. In this way there is the possibility of dedicating a pair to the span signallings and the second one to the ring signallings. In this way it is possible to manage several span requests (also with different priority) and ring requests at the same time.

The invention will certainly result in being clear from the following detailed description, given merely by way of example and not of limitation, to be read with reference to the annexed figures, wherein:
- Fig. 1 shows a telecommunications network with a four-fiber ring topology that is not affected by any failure;
- Fig. 2 shows the same network of Fig. 1 affected by a ring failure and by a span failure at the same time;
- Fig. 3 shows the same network of Fig. 2 also affected by a fiber degrade;
- Fig. 4 shows the same network of Fig. 2 but affected by two different failures; and
- Fig. 5 shows the network of Fig. 2 in which the failures are managed through the method of the present invention.
Before providing a detailed description of the present invention, it is deemed useful to point out that it is well applicable to every kind of synchronous transmission, typically SDH and SONET. However, for clarity, it has been preferred to make reference to SDH environment only. Hence, any reference made, in this description and in the claims, to SDH synchronous transmissions is to be intended as including also the SONET transmissions, unless it is specifically indicated otherwise.

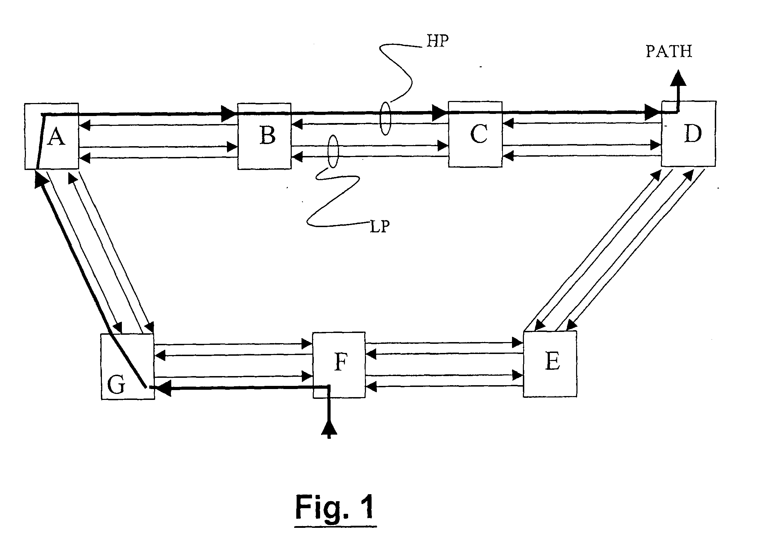

Fig. 1 shows a ring network with a plurality of nodes (A, B, ..., G) connected through four-fiber spans schematically represented by arrows: a pair of arrows representing the working channels (HP) and the other pair representing the protection channels (LP). At least one protected path for carrying information from one node to another is installed in the ring. For clarity reasons, only one path between D and F (terminating nodes) passing through intermediate nodes C, B, A and G is illustrated.

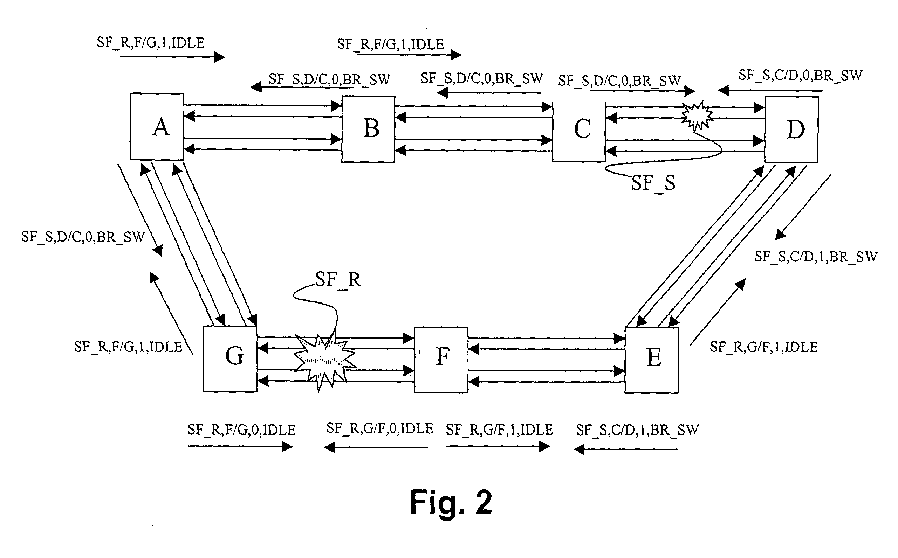

With reference to Fig. 2 (where the path is no longer indicated for clarity), a span failure (SF-S, Signal Fail-Span) in a span (C-D) is managed by simply passing the traffic over the corresponding protection fiber (LP). Analogously, a ring failure (SF-R, Signal Fail-Ring) in a span (G-F) is handled by utilizing the unaffected ring portion, i.e. the one where node E is an intermediate node.

Since in the protocol of ITU-T G. 841 the coexistence of ring and span protections is not contemplated, as the nodes affected by the span protection have to propagate only span requests and can not send ring requests, it will not be possible to save the path in the case where it is affected by two failures of different type (ring and span).

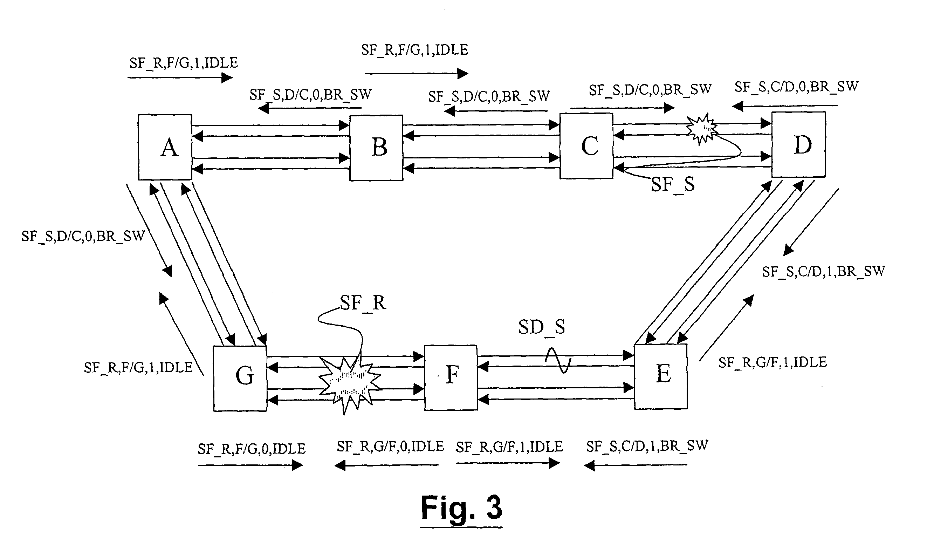

In the same scenario (Fig. 3) the presence of a span degrade (SD-S, Signal Degrade-Span) is not signalled as it has lower priority than the ring signalling (which anyway is not served).

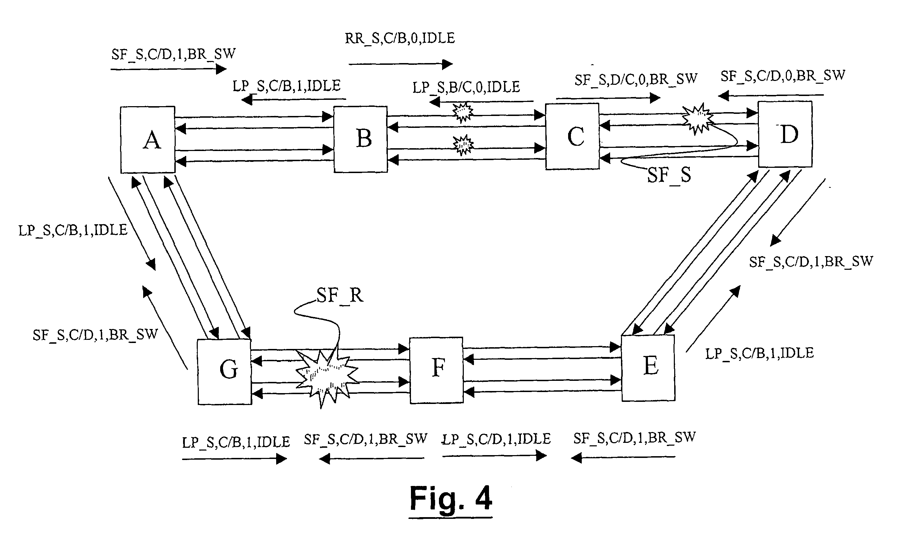

It may happen that a node, for instance node C of Fig. 4, being substantially isolated as affected by a span failure, from one side and a ring one from the other side, can not communicate to the ring the whole situation of its alarms.

Those described above with reference to Figs. 2 to 4 are only some of the situations in which the actual specification does not allow the maximization of the HP traffic restoration.

Starting from the consideration that anyway the four bits of the field "request" for byte K1 allow the coding of sixteen different requests (for commands or alarms) only, it has been concluded that there is a need to increase the number of bits available for the signallings. In this way it would be possible to communicate through K-bytes also those commands that must be known to all nodes of the ring (see "LP all span").

The basic idea of the present invention consists in providing for an additional signalling for the protection, using a second pair of bytes K1 and K2, picked from not yet used bytes, in the SDH (or SONET) frame. In this way there is the possibility of dedicating a pair to the span signallings and the second one to the ring signallings. In this way it is possible to manage several span requests (also with different priority) and ring requests at the same time.

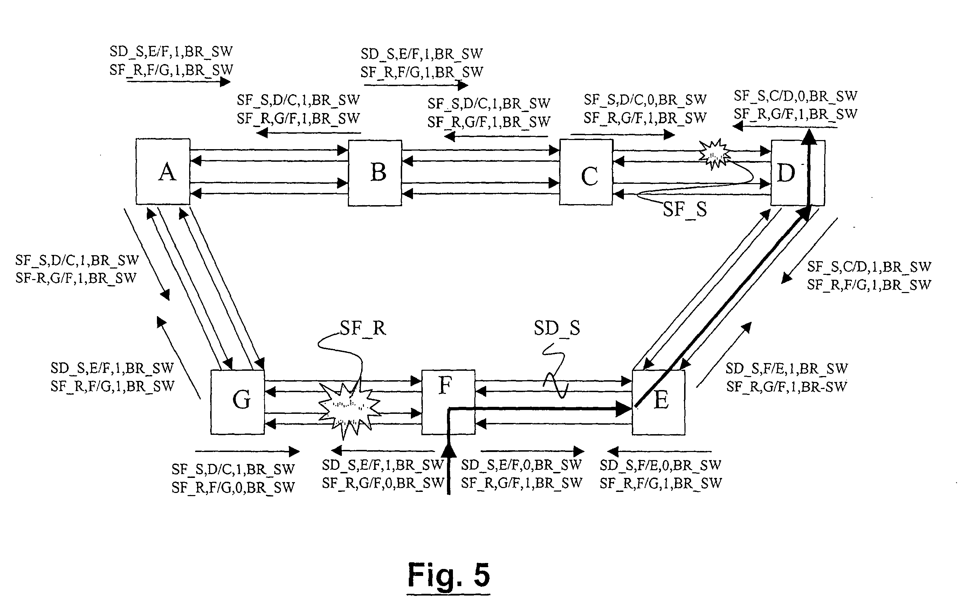

As shown in the drawing of Fig. 5, in accordance with the invention, each node handles in reception and in transmission, two pairs of bytes K1 and K2 for each side; the first pair is destined to a first type of signalling, for instance the span signalling, and the second pair to a second type of signalling, for instance the ring signalling. Each node analyzes its requests and decides among these the span request having higher priority and the ring request having higher priority.

Advantageously, the codings of bytes K1 and K2 remain those indicated above and standardized: in this way the additional processing complexity is reduced as compared with the conventional mechanisms.

In practice the protection protocol is divided into two levels, each of which is formally independent of the other as far as the signallings are concerned; for each of them the protection is performed according to the standard rules, i.e. the span protection keeps on being established on the short path while the ring protection is managed on the long path. It is each node that shall have to integrate the span information with the ring one in order to correctly execute the actions on the traffic: in fact it shall have to execute those actions dictated by the prioritized request between span and ring and then evaluate whether operations dictated by the less-priority request are feasible. In such a way the maximum protection on the high-priority traffic is provided.

As shown in Fig. 5, the idea of double signalling allows the management of ring and span protections at the same time (which is not allowed at present by the Recommendations). Although maintaining the priority already provided for, it would be possible to complete, in fact, the ring signalling and then protect some of the paths passing through the ring failure. Still referring to Fig. 5, not only the ring protection could be performed, but also the span degrade would be signalled.

According to the priority of the various signallings, the path of Fig. 1 could also be protected and saved in the event of a ring failure between G and F, of a span failure between C and D and of degrade between E and F.

Moreover, it would be possible to communicate some commands that at the moment are local (LP all span) and therefore notify to the entire ring the complete situation of each node.

The idea of doubling the signalling pair implies a more complex management of the traffic by each node; in fact, the consequent actions (AIS insertion, Bridge & Switch actions) must be taken by integrating the information of the two pairs of K-bytes and establishing on the ground of them which are the paths to be protected and which, instead, cannot be protected.

The additional signalling bytes (K1' and K2') can be taken from the OverHead part of the (SDH or SONET) frame. In principle any two bytes of the frame, that are not yet reserved for other purposes, i.e. those defined "for national use" in IUT-T G. 841, can be utilized.

Finally, the method of the invention allows for the management of multiple failure situations of different type in transoceanic telecommunications networks with a ring topology in which signals are transmitted organized as frames of bytes and in which the transmitted frames comprise a pair of bytes (K1, K2) for the signalling of events (failures or commands). The method is characterized by providing, in the transmitted frames, at least one additional pair of bytes (K1', K2'), the first pair of bytes (K1, K2) being used for signalling events of a first type whereas the at least one additional pair of bytes (K1', K2') being used for signalling events of a second type. The first type of events indifferently comprises span events (SF-S, SD-S) or ring ones (SF-R, SD-R); correspondingly, the second type of events comprises ring events (SF-R, SD-R) or span ones (SF-S, SD-S).

The very MS-SPRING management method mentioned above can be defined in terms of actions performed by the nodes or network elements. The method thus defined comprises the step of receiving signal frames comprising first signalling bytes (K1, K2) and is characterized by the step of receiving at least one additional pair of signalling bytes (K1', K2'), the first pair of bytes (K1, K2) being used for signalling events of a first type where the at least one additional pair of signalling bytes (K1', K2') being used for signalling events of a second type. The method comprises the additional step of processing the information carried by the first pair of bytes (K1, K2) and by the at least one additional pair of bytes (K1', K2') to perform actions (Bridge & Switch or Pass-through) designed to save as much traffic as possible in case of multiple events of different type. Such actions are based on the prioritized request between span and ring and comprise the step of evaluating whether operations on the paths dictated by the less-priority request are feasible. In this way the maximum protection on the high-priority traffic is assured.

The scope of the present invention naturally extends also to a telecommunications frame structure which comprises a first pair of bytes (K1, K2) used for the event signalling, characterized by comprising at least one additional pair of bytes (K1', K2') used for event signalling, the first pair of bytes (K1, K2) being used for signalling events of a first type whereas the at lest one additional pair of bytes (K1', K2') being used for signalling events of a second type.

Lastly, the scope of the present invention also extends to a node or network element able to process telecommunication frames of the above type and capable of performing the steps of the method.

The method of the invention can be implemented both by hardware and by software and therefore the scope of the invention also extends to a software program able to carry out the method and to a storage medium on which the software program is stored.

Although the present invention has been described with reference to the situation of ring networks affected by multiple failures for clarity reasons, it is apparent that the term "failure" is to be intended as comprising faults proper on the fiber, in network elements or in components thereof, but also signal degrades or operator commands that can be defined on the whole as "events".
Hence "span events" comprise:
- Signal Fail - Span (SF_S): in four-fibres ring, a failure is detected on the working channel of a span and the traffic can be restored by switching to the protection channels of the same span;
- Signal Degrade - Span (SF_S): in four-fibres ring, a degrade is detected on the working channel of a span and the traffic can be restored by switching to the protection channels of the same span;
- Signal Fall - Protection (SF_P): in four-fibres ring, a failure is detected on the protection channe of a span;
- Signal Degrade - Protection (SD_P): in four-fibres ring, a degrade is detected on the protection channel of a span;
- Manual Switch - Span (MS_S): this command switches the traffic from the working to the protection channels for the same span over which the command is initiated. This occurs if the protection channel are not in a SD condition and are not satisfying an equal or higher priority request;
- Forced Switch - Span (FS_S): this command switches the traffic from the working to the protection channels for the same span over which the command is initiated. This occurs if the protection channel are not in a SF condition and are not satisfying an equal or higher priority request;
"Ring events" comprise:
- Signal Fail - Ring (SF_R): a failure is detected on both the working and the protection channels of a span and the traffic can be restored by switching to the protection channels of the ring in the opposite direction of the span;
- Signal Degrade - Ring (SD_R): a degrade is detected on both the working and the protection channels of a span and the traffic can be restored by switching to the protection channels of the ring in the opposite direction of the span;
- Manual Switch - Ring (MS_R): this command switches the traffic from the working to the protection channels in the opposite direction of the span over which the command is initiated. This occurs if the protection channels are not in a SD condition and are not satisfying an equal or higher priority request;
Forced Switch - Span (FS_R): this command switches the traffic from the working to the protection channels in the opposite direction of the span over which the command is initiated. This occurs if the protection channels are not in a SF condition and are not satisfying an equal or higher priority request.

It is apparent that several modifications, adaptations and variants can be imparted to the method, to the frame and to the node according to the present invention without departing from the scope defined by the following claims which are all intended to be an integral part of the present description.

## Claims

1. Method for managing multiple requests of span and ring protections in telecommunications networks with a four-fibres ring topology protected by a traffic protection mechanism in which signals, arranged as frames of bytes, are transmitted and in which the transmitted frames comprise a first pair of bytes for indicating a request of ring protection (SF_R) of at least one type,
the method being **characterized by**
providing at least one additional pair of bytes in the transmitted frames, the at least one additional pair of bytes being used for indicating the requests of span protections (SD_S, SF_S) of at least two different types at the same time of the request of ring protection.

2. Method according to claim 1, **characterized in that** said telecommunications networks are transoceanic optical networks.

3. Method according to claims 1 or 2, wherein the network includes at least one path protected by the traffic protection mechanism, the method further comprising the steps of:
- processing the first pair of bytes and the at least one additional pair of bytes;
- evaluating if the at least one path (PATH) can be protected taking into account the processed bytes.

4. Frame for a telecommunications network with a four-fibres ring topology protected by a traffic protection mechanism, the frame comprising a first pair of bytes used for indicating a request of ring protection (SF_R) of at least one type,
said frame being **characterized by**
comprising at least one additional pair of bytes used for indicating requests of span protections (SF_S, SD_S) of at least two different types at the same time of the request of ring protection.

5. Network element (D) for telecommunications network with a four-fibres ring topology protected by a traffic protection mechanism in which signals arranged as frames travel through said network, the network element comprising means adapted to receive signal frames comprising a first pair of bytes for indicating a request of ring protection (SF_R) of at least one type, **characterized in that**
the means are further adapted to receive the frames comprising at least one additional pair of bytes for indicating requests of span protections (SF_S, SD_S) of at least two different types at the same time of the request of ring protection.

6. Computer program comprising computer program code means adapted to perform all steps of the method according to any of claims 1 to 3 when said program is run on a computer.

7. Computer readable medium having a program recorded thereon, said computer readable medium comprising computer program code means adapted to perform all steps of the method according to any of claims 1 to 3 when said program is run on a computer.

## Patentansprüche

1. Verfahren zum Verwalten einer Vielzahl von Anforderungen von Spannen- und Ringschutz in Telekommunikationsnetzwerken mit einer Vier- Faser Ringtopologie, die durch einen Verkehrsschutzmechanismus geschützt sind, bei dem Signale, die als in Rahmen angeordnete Bytes vorliegen, übertragen werden, und bei dem der übertragene Rahmen ein erstes Paar von Bytes enthält, das eine Anforderung von Ringschutz (SF_R) wenigstens eines Typs anzeigt, wobei das Verfahren
**dadurch gekennzeichnet ist,**
**dass** wenigstens ein weiteres Paar von Bytes in den übertragenen Rahmen bereitgestellt wird, wobei das wenigstens eine zusätzliche Paar von Bytes benutzt wird, um die Anforderungen von Spannenschutz (SD_S, SF_S) von wenigstens zwei verschiedenen Typen gleichzeitig mit der Anforderung von Ringschutz anzuzeigen.

2. Verfahren nach Anspruch 1, **dadurch gekennzeichnet, dass** die besagten Telekommunikationsnetzwerke ozeanüberquerende optische Netzwerke sind.

3. Verfahren nach Anspruch 1 oder 2, wobei das Netzwerk wenigstens einen Pfad aufweist, der durch den Verkehrsschutzmechanismus geschützt ist, und wobei das Verfahren weiterhin folgende Schritte umfasst:
- Verarbeiten des ersten Paars von Bytes und des wenigstens einen zusätzlichen Paars von Bytes;
- Auswertung, ob der wenigstens eine Pfad (PATH) unter Berücksichtigung der verarbeiteten Bytes geschützt werden kann.

4. Rahmen für ein Telekommunikationsnetzwerk mit einer Vier- Faser Ringtopologie, das durch einen Verkehrsschutzmechanismus geschützt ist, wobei der Rahmen ein erstes Paar von Bytes enthält, das eine Anforderung von Ringschutz (SF_R) wenigstens eines Typs anzeigt, wobei der besagte Rahmen **dadurch gekennzeichnet ist,**
**dass** er wenigstens ein weiteres Paar von Bytes enthält, das zur Anzeige von Anforderungen von Spannenschutz (SF_S, SD_S) von wenigstens zwei verschiedenen Typen gleichzeitig mit der Anforderung von Ringschutz benutzt wird.

5. Netzwerkelement (D) für ein Telekommunikationsnetzwerk mit einer Vier- Faser Ringtopologie, das durch einen Verkehrsschutzmechanismus geschützt ist, wobei in Rahmen angeordnete Signale über das besagte Netzwerk übertragen werden, wobei das Netzwerkelement Mittel umfasst, die eingerichtet sind zum Empfangen von Signalrahmen, die ein erstes Paar von Bytes enthalten, das eine Anforderung von Ringschutz (SF_R) wenigstens eines Typs anzeigt, **dadurch gekennzeichnet, dass**
die Mittel weiterhin eingerichtet sind, die Rahmen zu empfangen, die wenigstens ein zusätzliches Paar von Bytes enthalten, um die Anforderungen von Spannenschutz (SF_S, SD_S) von wenigstens zwei verschiedenen Typen gleichzeitig mit der Anforderung von Ringschutz anzuzeigen.

6. Computerprogramm, enthaltend Computerprogrammcodemittel, die eingerichtet sind, alle Schritte des Verfahrens nach einem der Ansprüche 1 bis 3 durchzuführen, wenn das besagte Programm auf einem Computer läuft.

7. Computerlesbares Medium, das ein auf ihm aufgezeichnetes Programm enthält, wobei das besagte computerlesbare Medium Computerprogrammcodemittel enthält, die eingerichtet sind, alle Schritte des Verfahrens nach einem der Ansprüche 1 bis 3 durchzuführen, wenn das besagte Programm auf einem Computer läuft.

## Revendications

1. Procédé de gestion de multiples demandes de protections linéaires et en anneau dans les réseaux de télécommunications avec une topologie en anneau à quatre fibres par un mécanisme de protection de trafic dans lequel des signaux, agencés sous la forme de trames d'octets, sont transmis et dans lequel les trames transmises comprennent une première paire d'octets pour indiquer une demande de protection en anneau (SF_R) d'au moins un type,
le procédé étant **caractérisé par**
la fourniture d'au moins une paire d'octets supplémentaire dans les trames transmises, l'au moins une paire d'octets supplémentaire étant utilisée pour indiquer des demandes de protections linéaires (SD_S, SF_S) d'au moins deux types différents en même temps que la demande de protection en anneau.

2. Procédé selon la revendication 1, **caractérisé en ce que** lesdits réseaux de télécommunications sont des réseaux optiques transocéaniques.

3. Procédé selon les revendications 1 ou 2, dans lequel le réseau comprend au moins un chemin protégé par le mécanisme de protection de trafic, le procédé comprenant en outre les étapes consistant à :
- traiter la première paire d'octets et l'au moins une paire supplémentaire d'octets ;
- évaluer si l'au moins un chemin (PATH) peut être protégé en tenant compte des octets traités.

4. Trame pour un réseau de télécommunications ayant une topologie en anneau à quatre fibres protégée par un mécanisme de protection de trafic, la trame comprenant une première paire d'octets utilisés pour indiquer une demande de protection en anneau (SF_R) d'au moins un type,
**caractérisée par**
la présence d'au moins une paire supplémentaire d'octets utilisée pour indiquer des demandes de protections linéaires (SF_S, SD_S) d'au moins deux types différents en même temps que la demande de protection en anneau.

5. Elément de réseau (D) pour un réseau de télécommunications avec une topologie en anneau à quatre fibres protégée par un mécanisme de protection de trafic, dans lequel des signaux agencés sous la forme de trames, se propagent à travers ledit réseau, l'élément de réseau comprenant des moyens adaptés pour recevoir des trames de signaux comprenant une première paire d'octets pour indiquer une demande de protection en anneau (SF_R) d'au moins un type,
**caractérisé en ce que**
les moyens sont en outre adaptés pour recevoir les trames comprenant au moins une paire supplémentaire d'octets pour indiquer des demandes de protections linéaires (SF_S, SD_S) d'au moins deux types différents en même temps que la demande de protection en anneau.

6. Programme informatique comprenant des moyens de codage de programme informatique adaptés pour effectuer toutes les étapes du procédé selon l'une quelconque des revendications 1 à 3 lorsque ledit programme est exécuté sur un ordinateur.

7. Support lisible par ordinateur ayant un programme enregistré sur celui-ci, ledit support lisible par ordinateur comprenant des moyens de codage de programme informatique adaptés pour effectuer toutes les étapes du procédé selon l'une quelconque des revendications 1 à 3 lorsque ledit programme est exécuté sur un ordinateur.
